Europäisches Patentamt

**European Patent Office**

Office européen des brevets

(19)

(11) Publication number: **0 232 187 B1**

(12)                    **EUROPEAN PATENT SPECIFICATION**

(45) Date of publication of patent specification :
**10.04.91 Bulletin 91/15**

(51) Int. Cl.⁵ : **G21C 17/10**

(21) Application number : **87301077.1**

(22) Date of filing : **06.02.87**

(54) **Thimble guide extender.**

(30) Priority : **06.02.86 US 826522**

(43) Date of publication of application :
**12.08.87 Bulletin 87/33**

(45) Publication of the grant of the patent :
**10.04.91 Bulletin 91/15**

(84) Designated Contracting States :
**BE CH ES FR GB IT LI**

(56) References cited :
**DE-A- 2 832 122
FR-A- 2 483 671
FR-A- 2 573 236
FR-A- 2 592 517**

(73) Proprietor : **WESTINGHOUSE ELECTRIC
CORPORATION
Westinghouse Building Gateway Center
Pittsburgh Pennsylvania 15222 (US)**

(72) Inventor : **Merkovsky, Daniel
2034 McKinney Road
Monroeville, PA 15146 (US)**
Inventor : **Gasparro, Michael Raymond
188 Colonial Village Drive
Pittsburgh, PA 15235 (US)**

(74) Representative : **van Berlyn, Ronald Gilbert
23, Centre Heights
London, NW3 6JG (GB)**

Jouve, 18, rue Saint-Denis, 75001 PARIS

## Description

The present invention relates to an extender for a thimble guide in a nuclear power plant, and more particularly to an extender which telescopically cooperates with the thimble guide to provide a shielded passage for the thimble up to the bottom nozzle of a fuel assembly.

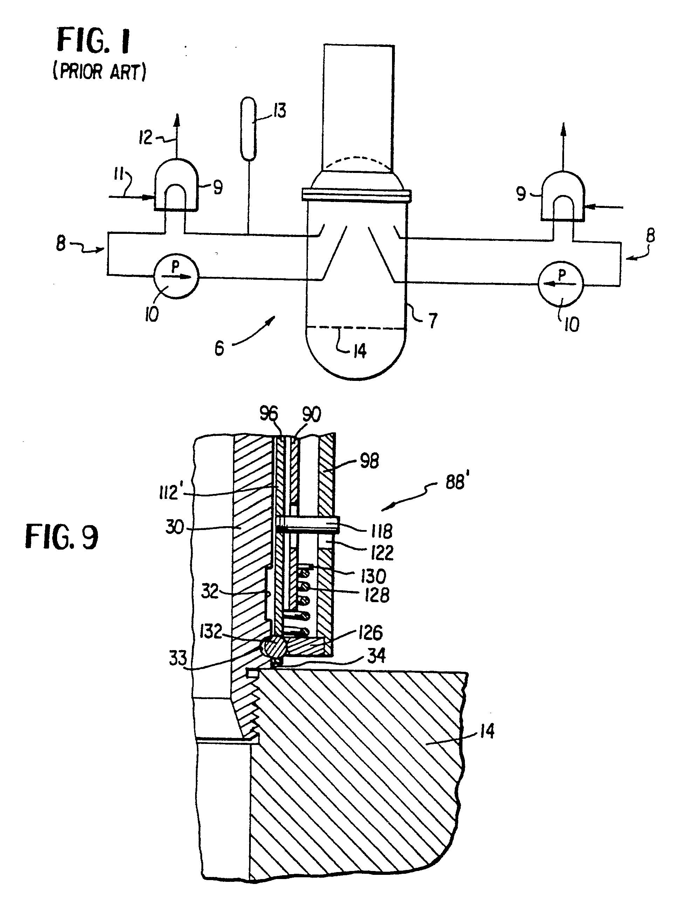

As schematically illustrated in Figure 1 of the accompanying drawings, a typical pressurized water reactor 6 includes a reactor vessel 7 which contains nuclear fuel, a cooling system for circulating a coolant (water) which is heated by the nuclear fuel, and means for monitoring and controlling the nuclear reaction. The reactor vessel 7 is cylindrical, and is provided with a permanent hemispherical bottom and a removable hemispherical top. Coolant is conveyed from and returned to the vessel 7 by the cooling system which includes one or more reactor cooling loops 8 (usually two, three or four loops, depending upon the power-generating capacity of the reactor). Each loop 8 includes a pipeline for conveying hot water from the reactor vessel 7 to a steam generator 9, a pipeline for conveying the water from the steam generator 9 back to the reactor vessel 7, and a pump 10. Each steam generator 9 is essentially a heat exchanger which transfers heat from the reactor cooling system to water received at inlet 11 from a source which is isolated therefrom, the resulting steam being conveyed through outlet 12 to a turbine (not illustrated) driving electric generating apparatus (not shown). During operation of the reactor 6, the water within the vessel and the cooling system is maintained at a controlled high pressure by pressurizer 13 to keep it from boiling as it is heated by the nuclear fuel.

Nuclear fuel is supplied to the reactor vessel 7 in fuel rods incorporated in fuel assemblies, each of which includes a lower end structure or bottom nozzle, a bundle of the fuel rods, and tubular control-rod and instrument guides which are supported on the bottom nozzle. The fuel rods have cylindrical housings which are filled with pellets of fissionable material enriched with U-235. The tubular guides accommodate measuring instruments and movable control rods of neutron-absorbing material. A typical fuel assembly for a pressurized water reactor is about 4.1 meters long, about 19.7 centimeters wide, and has a mass of about 585 kg ; a typical four-loop reactor might contain 196 such fuel assemblies supported parallel to one another on a core plate within the reactor vessel. After a service life during which the U-235 enrichment of the fuel assemblies is depleted, the reactor 6 is shut down, the pressure within the vessel 7 is relieved, the hemispherical top of the vessel is removed, and the spent fuel assemblies are replaced with new ones.

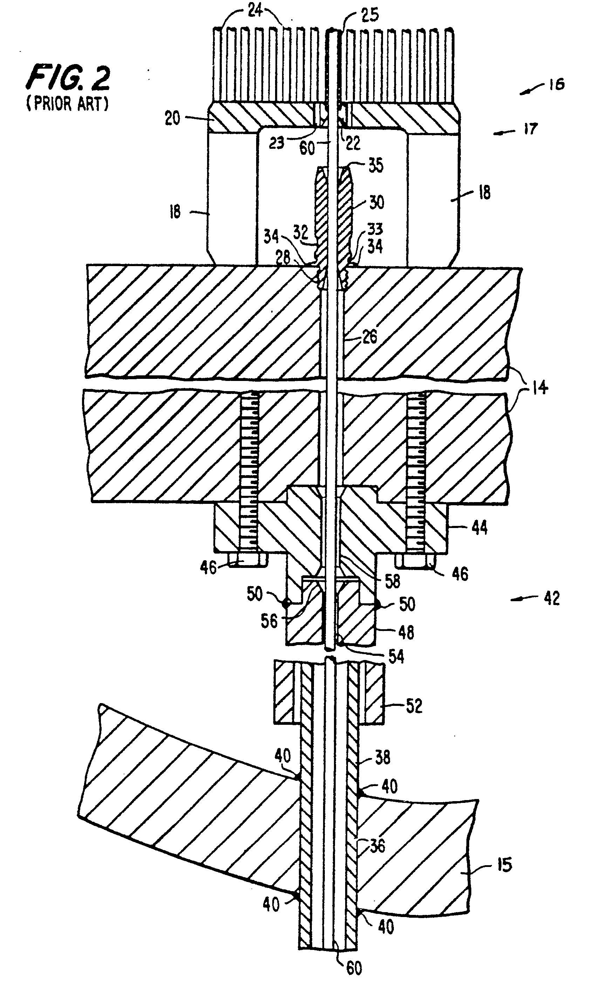

A number of measuring instruments are employed to promote safety and to permit proper control of the nuclear reaction. Among other measurements taken, a neutron-flux map is generated periodically, such as every 28 days, using data gathered by neutron flux detectors which are inserted into and moved through a number of randomly selected fuel assemblies. In order to guide the flux detectors during their periodic journeys, there are employed closed stainless-steel tubes known as flux thimbles which extend through the bottom of the reactor vessel 7 and into the fuel assemblies which have been selected as measuring sites, as will now be explained in more detail with reference to Figure 2.

As shown in Figure 2, a thick lower core plate 14 is horizontally mounted within reactor vessel 7 above the latter's hemispherical bottom end wall, a portion of which is seen at 15. The plate 14 supports the fuel assemblies, such as fuel assembly 16, of the reactor in an orderly array. The bottom nozzle of the fuel assembly in Fig. 2 is shown at 17 and it has four legs 18 which are joined to a platform portion 20 which has formed therethrough a central aperture 22 and a plurality of coolant flow openings 23, only two of which are shown in Figure 1B. The platform portion 20 supports the fuel rods 24 at locations out-of-alignment with the flow openings 23, and supports the instrumentation tube 25 in alignment with the aperture 22.

A bore 26 in axial alignment with the aperture 22 and having a threaded region 28 extends through the core plate 14, and a conventional thimble guide 30 having a threaded portion and a recessed wrench-engaging region 32 is sealed and threadedly engaged in the threaded region 28 of the core plate 14, and is additionally secured to the latter by means of welds 34. Typically, the guide 30 may measure 8.58 cm from the upper surface of the core plate 14 to the upper lip 35 of the guide 30, and there may be a gap of 3.48 cm between the upper lip 35 and the aperture 22.

A bore 36 extends through the vessel wall 15 in alignment with the bore 26. A vessel-penetration sleeve 38 having an outer diameter of about 3.80 cm extends through the bore 36 and is welded to the vessel wall 15 at 40 to provide a seal which is resistant to high pressure. An instrumentation column 42 bottom-mounted on the core plate 14 comprises a fitting 44 which is secured to the core plate 14 by means of bolts 46, an upper pipe element 48 which is joined to the fitting 44 by means of welds 50, and a lower pipe element 52 which is joined coaxially to element 48 at a tie plate (not shown). The lower pipe element 52 may have an inner diameter of about 5.10 cm, a gap being provided between the sleeve 38 and the element 52.

In a typical four-loop pressurized-water reactor having 196 fuel assemblies 16, fifty-eight of the fuel assemblies 16 would be randomly selected for neutron flux monitoring so that there would be fifty-eight thimble guides 30 each communicating through the associated bore 26 and bottom-mounted -instrumentation column 42 with the associated vessel-penetration sleeve 38. During fabrication, the sleeves 38 would be installed in the reactor vessel wall 15, and the guides 30 and bottom-mounted instrumentation columns 42 would be installed on the core plate 14, whereupon the core plate 14 and attached structures would be lowered into the vessel, with the pipe elements 52 telescoped over the sleeves 38. In the resulting structure, the upper ends (not illustrated) of the sleeves 38 would be spaced from the lower ends (not illustrated) of the upper pipe elements 48, i.e., the sleeves 38 would not be sealed in fluid-flow communication with the bottom-mounted instrumentation columns 42 associated therewith.

The bore 54 through the upper pipe element 48 typically has a diameter of from about 1.19 cm to about 1.55 cm and terminates in a flared region 56. The bore 58 through the fitting 44 is typically 1.73 cm in diameter and has flared regions at both ends. The bore 26 through the core plate 14 typically has a diameter of about 1.90 cm. Thus, it is apparent that the instrument channel provided by the bores 54, 58 and 26 widens progressively from the upper pipe element 48 into the fitting 44 and into the bore 26. This construction facilitates the assembly of the reactor in that it provides guidance for the flux thimble 60 during insertion thereof and thereby prevents it becoming stuck within the channel.

The flux thimble 60 is a relatively long stainless-steel tube which, when the thimble is in use, begins at a so-called seal plate (not illustrated) outside the reactor vessel 7 and has a closed end (not illustrated) disposed inside the associated fuel assembly 16. When in use, the thimble 60 extends slidably through the tube 25, the guide 30, the bore 26, the bottom-mounted instrumentation column 42, and the sleeve 38. A stainless-steel guide tube (not illustrated) is welded to the outer end of the sleeve 38, and the flux thimble 60 extends within the guide tube to the seal table which is typically located in a shielded position at an elevation near the top of vessel 7. Since the interior of the vessel 7 is in fluid flow communication with the interior of sleeve 38, the guide tube provides a pressure boundary which extends around the flux thimble 60 from the vessel wall 15 to the seal table, where a high pressure seal (not illustrated) is provided between the inner wall of the guide tube (not illustrated) and the outer wall of the flux thimble 60. Thus, the flux thimble 60 provides a low-pressure access channel into the reactor vessel 7 from a shielded position outside of the rector vessel 7.

A flux detector (not illustrated) about 5 cm long is slidable within the flux thimble 60 and attached to a flexible push-pull cable (not illustrated) which extends through the thimble 60 to flux-mapping equipment (not illustrated) located beyond the seal table (not illustrated). At periodic intervals, typically once every 28 days, the flux detectors in the various flux thimbles are pushed to the tops of the latter and then are slowly withdrawn again to take flux measurements at different elevations within the fuel assemblies 16 for the purpose of providing a neutron flux map of the interior of the reactor vessel 7.

Normally, the flux thimbles 60 remain inserted in the instrumentation tubes 25 of the randomly selected fuel assemblies 16 between the periodic flux mapping operations, but they must be withdrawn from fuel assemblies 16 when the reactor 6 is shut down for refueling and fuel shuffling which may occur at intervals of, say, 12-18 months. During a refueling operation, the reactor is shut down, the pressure within the reactor vessel 7 is relieved, and the guide tubes (not illustrated) are unsealed from the flux thimbles 60 at the seal table (not illustrated). The flux thimbles 60, which are somewhat flexible, are then withdrawn a distance of about 4.25 m in order to free them from the spent fuel assemblies 16, which latter thereupon are removed and replaced with fresh fuel assemblies 16 by means of remotely controlled equipment. Finally, the flux thimbles 60 are driven into the fresh fuel assemblies 16, the reactor vessel 7 and seal table are sealed, and the reactor is put into operation again.

The conventional thimble guide 30 shown in Fig. 2 has some shortcomings. Thus, it has been found that considerable turbulence exists, during operation of the reactor 6, in the region between the core plate 14 and the platform portions 20 of the fuel assemblies 16. The conventional thimble guides 30 expose significant portions of the flux thimbles 60 to this turbulence as a result of which the thimbles may vibrate and, consequently, be subject to objectionable wear. Simply increasing the length of the guides 30 is not a practical solution to this problem since fuel assembly designs, including the lengths of the legs 18 tend to change. Since the flux guides 30 are permanently installed at the time the vessel 7 is built, selecting a particular and definite length for the guides 30 at that time might make it impossible to take advantage of future design improvements in fuel assemblies. Besides, it would be undesirable to make conventional thimble guides, such as the guide 30 shown in Fig. 2, long enough to touch the bottom nozzles 17 of the associated fuel assemblies because very slight dimensional inaccuracies could upset the footing of the legs 18 and leave the fuel assemblies tottering atop such full-length, solid thimble guides 30. It has also been found that fluid flow in the gap around a flux thimble 60, due to the progressively widening channel from the upper pipe element 48 to the fitting 44 and to the bore 26, may be sufficient to cause vibration of the flux thimble and, hence, increased wear.

It is the principal object of the invention to overcome these drawbacks, and the invention accordingly resides in a thimble guide assembly as disclosed in the appended claims.

This thimble guide assembly embodying the invention will provide a shielded passage for the thimble throughout the space existing between the core plate and the bottom-nozzle portion of the fuel assembly so that the thimble will be fully shielded from vibration-causing coolant flow. Furthermore, and since the effective axial length of the thimble guide is variable to the extent of said limited axial relative motion permitted between the thimble guide and the hollow thimble-extender element, either the whole thimble guide assembly or, if the thimble guide is already installed, just the guide extender can be retrofitted in an existing nuclear reactor.

The means for maintaining the upper portion of the hollow thimble-extender element in abutment with the bottom-nozzle portion comprises locking fingers which extend from the upper portion of the hollow element and are interlockable with said bottom-nozzle portion. Preferably, the locking fingers are insertable through coolant-flow openings in the bottom-nozzle portion and have, at the distal ends thereof, hooks cooperable with surface portions of the bottom-nozzle to interlock therewith. The lower portion of the hollow element has an annular groove formed in an inner peripheral wall portion thereof, and has a resilient sealing ring loosely retained in the annular groove and disposed in sliding contact with the outer periphery of the thimble guide.

In a preferred embodiment, the thimble extender includes, in addition to said hollow element, a sleeve-like inner element which is disposed within said hollow element, is telescoped over the thimble guide, and has latching means for releasably latching the hollow element to the thimble guide, the guide extender including further a locking element which is cooperable with the latching means and movable between an effective position and an ineffective position for preventing and permitting, respectively, release of the latching means. The locking element is a sleeve-like outer element which has a locking portion and is slideable, on said hollow element, between said effective and ineffective positions to move the locking portion respectively into and from locking engagement with said latching means. Preferably, the latching means comprises a plurality of resilient fingers each projecting from said inner element and including a latching formation which mates with an annular groove in the outer periphery of the thimble guide. Alternatively, the latching means may comprise a plurality of balls which are captively retained in openings formed in an annular wall portion of the inner element and which mate with the annular groove in the outer periphery of the thimble guide. The locking element is biased toward its effective position, preferably by means of a spring operatively interposed between the hollow element and the locking element. The hollow element is biased in a direction toward abutment with said bottom-nozzle portion by means of a spring interposed between the hollow and inner elements, and the guide extender includes means for limiting movement of the hollow element under the action of said spring. These limiting means comprise at least one elongate slot formed in a wall portion of the hollow element, and at least one pin disposed on the inner element and extending therefrom through the elongate slot of the hollow element and, preferably, also through an elongate slot which is formed in a wall portion of the locking element and cooperates with the pin to locate and hold the locking element in its effective position against the action of the biasing spring associated therewith.

The thimble guide assembly of either embodiment will accommodate a slight lateral misalignment between the thimble guide assembly and the bottom nozzle of the fuel assembly. Moreover, the guide extender of either embodiment is self-contained in that its component parts cannot become separated and adrift in the cooling system of the nuclear reactor when in use.

Preferred embodiments of the invention will now be described, by way of example only, with reference to Figures 3 to 9 of the accompanying drawings, in which :

Figure 1 schematically illustrates the major operative elements of a typical pressurized water reactor ;

Fig. 2 is a sectional view of the arrangement including the conventional thimble guide discussed above ;

Fig. 3 is a sectional view illustrating thimble guide assembly including an extender and embodying the invention ;

Fig. 4 is a top plan view of a hollow cap element of the guide assembly shown in Fig. 3 ;

Fig. 5 is a perspective partial view illustrating the attachment prongs of the hollow cap element ;

Fig. 6 is a top plan view of a sealing spring of the assembly shown in Fig. 3 ;

Fig. 7 is a front elevational partial view of the sealing ring ;

Fig. 8 is a sectional view of a thimble guide assembly including an extender and representing a second embodiment of the invention ; and

Fig. 9 is a sectional partial view of a modification of the second embodiment shown in Fig. 8.

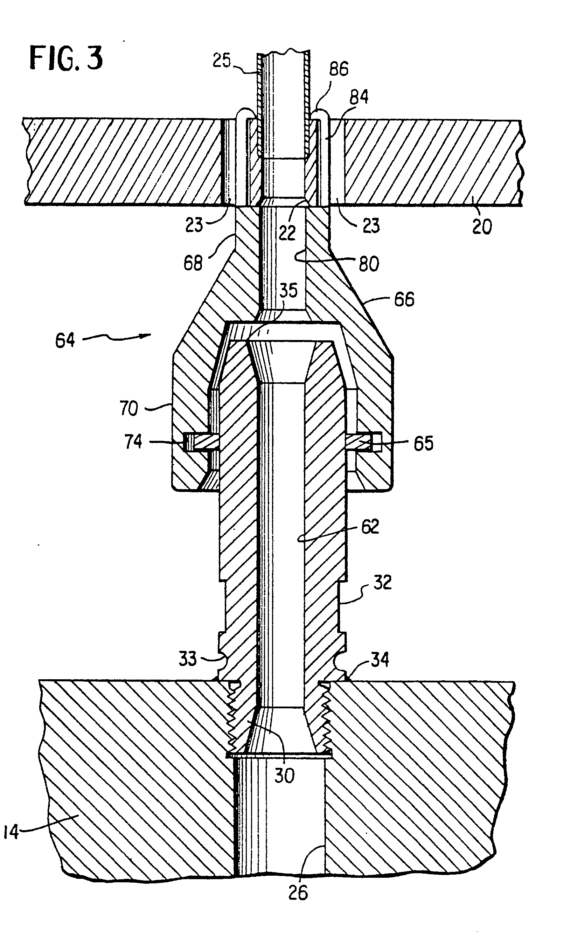

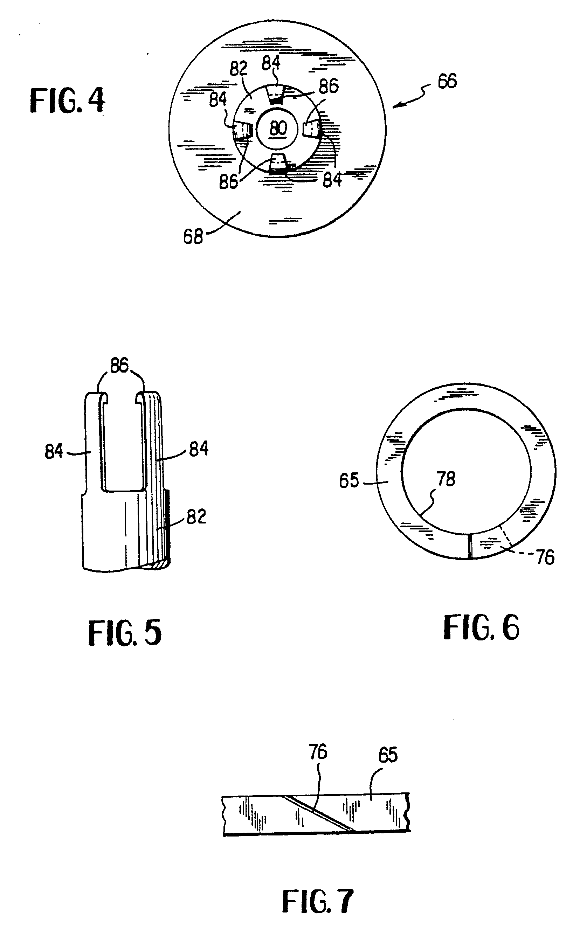

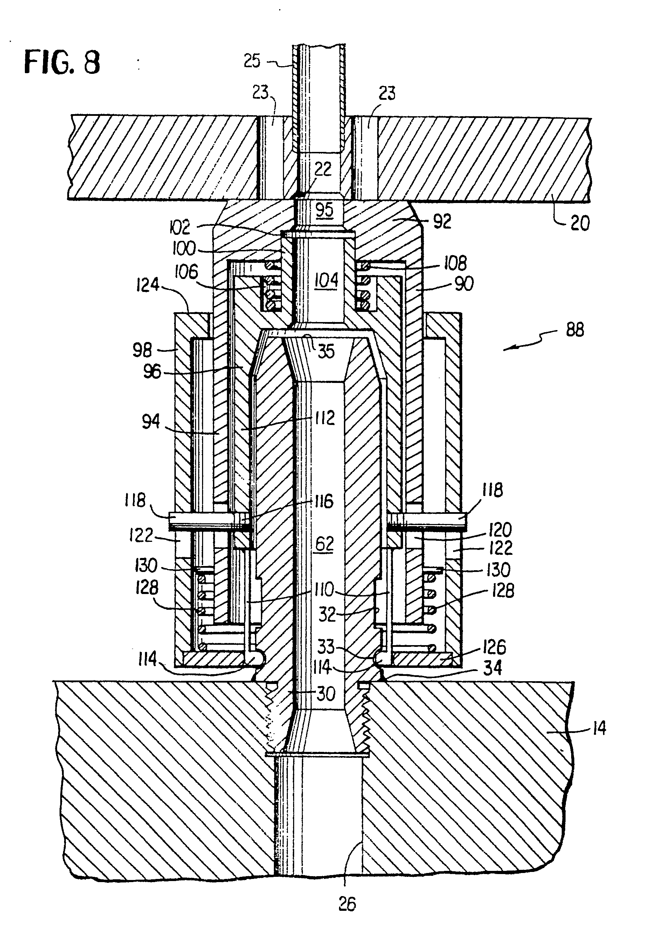

Referring in particular to Fig. 3, the thimble guide assembly illustrated therein comprises a thimble guide 30 and a thimble guide extender 64. The thimble guide 30 is similar to the conventional guide 30 shown in Fig. 2, and is mounted on the core plate 14 in a similar manner such that the axial channel 62 through the thimble guide is axially aligned with the bore 26 of the core plate 14 and with an aperture 22 in the platform portion 20 of a fuel assembly. The thimble guide extender 64 comprises a generally bell-shaped, hollow cap element 66 which has an upper portion 68 in contact with the platform 20 of the bottom nozzle of the fuel assembly and a lower portion 70 which envelopes an upper end portion of the thimble guide 30. The extender 64 includes further a sealing ring 65 which is loosely retained in an annular groove 74 formed in the lower portion 70 of the cap element 66 interiorly thereof, and which ring 65 is provided with an oblique cut 76, (Figs. 6 and 7) enabling, the ring 65 to act as an annular spring having its inner peripheral surface 78 biased against the outer peripheral surface of the thimble guide 30.

The upper portion 68 of the cap element 66 has a thimble passage 80 which extends axially therethrough in axial alignment with an extension of the channel 62 through the thimble guide 30. The upper portion 68 has a cylindrical end section 82 (see also Figs. 4 and 5) from which extend axially four resilient locking fingers 84 each terminating in a hook 86.

The use of the thimble guide extender 64 will now be explained. Before a fuel assembly is loaded into the vessel 7 (Fig. 1), the extender 64 is attached to the platform portion 20 of the lower nozzle of the fuel assembly through remote control by moving it toward the bottom nozzle in a manner such that its fingers 84 enter four flow openings 23 adjacent the central aperture 22 and axially move therein until the hooks 86 of the fingers snap into place. This connects the extender 64 firmly to the bottom nozzle of the fuel assembly. When the fuel assembly thereafter is lowered into the vessel 7, the upper end of the thimble guide 30 will pass through the opening 78 of the sealing ring 65 and enter the bell-shaped lower portion 70 of the cap element 66 until the legs 18 (Fig. 2) on the bottom nozzle 14 of the fuel assembly come to rest upon the core plate 17. During this relative motion between the thimble guide 33 and the extender 64, the sealing ring 65 slides along the guide 33 on the outer surface thereof. As seen from Fig. 3, the annular groove 74 is made slightly oversized, i.e., sufficiently so as to accommodate a slight horizontal displacement of the fuel assembly with respect to the thimble guide 30 or, in other words, to permit the fuel assembly to be installed with the axis of the passage 80 parallel to but slightly displaced from the axis of the channel 62. For the purposes of this application, a slight displacement of the axes of the channel 62 and the passage 80 of, say, up to 4 mm will be deemed substantially coaxial". It is expected that, normally, the displacement of these axes with respect to each other will be less than half, and preferably less than a quarter, of this amount

Referring now to Fig. 8 which illustrates another embodiment of the invention, the thimble guide extender 88 of the thimble guide assembly illustrated therein comprises a hollow cap element 90 having an upper portion 92 which contacts the platform portion 20 of the lower nozzle of a fuel assembly, and a lower portion 94 which surrounds at least an upper end portion of the thimble guide 30. The upper portion 92 has thimble passage 95 extending therethrough substantially in axial alignment with thimble guide channel 62.

The extender 88 includes further sleeve-like inner and outer elements 96 and 98 which are fit substantially coaxially into and over, the cap element 90 in radially spaced relationship therewith, the spacing between the elements 90, 96 and 98 being exaggerated in Fig. 8 for clearer illustration.

At its upper end, the inner element 96 has a cylindrical projection 100 which is slidingly engaged in a counterbore 102 formed in the passage 95 of the cap element 90. The cylindrical projection 100 has a thimble passage 104 axially extending therethrough and communicating with both the channel 62 and the passage 95. An annular recess 106 around the projection 100 serves as a seat for a pressure spring 108 interposed between the inner element 96 and the cap element 90 to keep the upper portion 92 of the latter biased against the underside of the platform portion 20.

The inner element 96 is provided with resilient spring fingers 110 which extend axially downward from the cylindrical wall 112 of the inner element 96. In the illustrated embodiment there are four spring fingers 110, although three or some other suitable number of fingers could be used. Each of the spring fingers 110 terminates in an enlargement 114 which protrudes inward and mates with a groove 33 in the outer periphery of the thimble guide 30 so as to attach the inner element 96 to the guide 30. Each enlargement 114 has its inwardly directed surface contoured to conform to the cross-sectional shape of the groove 33, and has its outwardly directed surface rounded and slightly protruding outward from the associated finger 110.

The fingers 110 together with their enlargements 114 may be provided, during fabrication of the element 96, by machining a workpiece into a hollow cylindrical member having a cross-sectional configuration corresponding to that of the element 96 as shown in Fig., 8, and then removing elongate segments from the lower thin-walled portion of the element so as to provide the separate fingers 110 with their enlargements 114.

The wall 112 of the inner element 96 is provided with threaded openings 116 into which are screwed pegs 118 extending radially from the wall 112 and through longitudinal slots 120, 122 formed in the cap element 96 and in the outer element 98, respectively.

The outer element 98 has adjacent its upper end an inwardly directed annular flange 124 which surrounds the cap element 90 in closely spaced relationship therewith so as to guide the outer element 98 for axial sliding motion thereof relative to the cap element 90. A locking ring 126 is affixed, by means of pegs (not illustrated) to the lower end of the outer element 98 and serves as a support for a pressure spring 128 held under partial compression between the ring 126 and pegs 130 secured to the cap element 94. The spring constant of the spring 128 is less than that of the spring 108. The inner edge of the locking ring 126 is rounded and extends inward far enough to lightly touch the enlargements 114 of the fingers 110.

Prior to installation of the thimble guide extender 88, oppositely directed relative movement of cap element 90 and the inner element 96 with respect to each other under the action of the spring 108 is limited through engagement of the pegs 118 with the bottoms of the slots 120, and oppositely directed relative movement of the outer element 98 and the cap element 90 under the action of the spring 128 is limited through engagement of the pegs 118 with the tops of the slots 122. Extenders, such as extender 88, may be installed in a new reactor during the assembly thereof or in an existing reactor, during shut-down and refueling, through remote control or manually be shielded divers limiting their exposure to safe levels. During installation of the extender 88, the outer element 98 is pulled upward, against the action of the spring 128, until the bottoms of the slots 122 engage the pegs 118, whereby the inner edge of the locking ring 126 is moved off the enlargements 114 of the flexible fingers 110. The extender 88 is then deposited on a thimble guide 30 and lowered until the enlargements 114 of the spring fingers 110, which slightly flex during this movement, snap into the groove 33, whereupon the outer element 98 is released to the action of the spring 128 which will force the element 98 down until stopped by the pegs 118 engaging the upper end surfaces of the slots 122. In this lower position, the inner edge of the ring 126 is aligned with the enlargements 114 of the fingers 110 to prevent their inadvertent dislodgement from the groove 33. When a fuel assembly is subsequently lowered onto the extender 88, the platform portion 20 of its bottom nozzle will engage the upper portion 92 of the cap element 90 and depress the latter against the action of the spring 100 until the legs 18 (Fig. 2) of the platforms 20 seat upon the core plate 14. It should be noted that this downward movement of the fuel assembly is limited by the length of its legs 18 rather than by the extender 88, the slots 120 of the cap member 90 being long enough, and the upper portions of the latter and the inner element 96 being constructed, to permit some over-travel of the cap element 90 after the fuel assembly is seated upon the core plate 14.

Referring now to Fig. 9, it shows a portion of a modified extender 88' which is similar to the extender 88 of Figure 8 but is locked to the thimble guide 30 by means of captured locking balls 132 instead of the spring fingers 110 with their enlargements 114. As seen from Fig. 9, the inner element 96 has a modified cylindrical wall 112' with openings (not numbered),for the balls 132 formed therein near the lower end thereof. The locking ring 126 is closely machined to provide a sliding fit between it and the balls 132, each of which is retained in its respective opening by staking the metal of the wall 112' adjacent the opening and on either side of wall 112' in a manner causing the metal to be deformed so as to hold the ball 132 captive.

## Claims

1. A thimble guide assembly for receiving an elongate thimble inserted into a nuclear fuel assembly through a passage (26) in a reactor core plate (14) supporting the fuel assembly, and through an aperture (22) formed in a bottom-nozzle portion (20 of the fuel assembly substantially in axial alignment with said passage yet spaced therefrom, said thimble guide assembly including an elongate thimble guide (30) which has a thimble channel (62) extending axially therethrough and is adapted to be fixedly mounted on said core plate (14) such that the thimble guide (30) has its thimble channel (62) axially aligned and communicating with said passage (26) of the core plate and projects from the latter toward said bottom-nozzle portion (20), characterized in that said thimble guide assembly includes further a guide extender (64) comprising a hollow element (66) which is telescoped partially over the thimble guide (30) and is axially movable relative thereto, said hollow element having a lower portion (70) which surrounds part of the thimble guide, and an upper portion (68) which extends above the thimble guide (30) and has a thimble passage (80) extending therethrough substantially in axial alignment with the thimble channel (62) of the thimble guide ; and means (84, 86) effective to maintain said upper portion (68) of the hollow element (66) in abutment with said bottom-nozzle portion (20) when the thimble guide assembly is in use, said means (84, 86) comprising locking fingers (84, 86) which extend from said upper portion (68) of the hollow element and are interlockable with said bottom-nozzle portion (20).

2. A thimble guide assembly according to claim 1, characterized in that said locking fingers (84, 86) are insertable through coolant-flow openings (23) in the bottom-nozzle portion (20) and have hooks (86) formed at the distal ends thereof, said hooks being cooperable with surface portions of the bottom-nozzle portion to interlock therewith.

3. A thimble guide assembly according to claim 1 or 2, characterized in that said lower portion (70) of the hollow element (66) has an annular groove (74) formed in an inner peripheral wall portion thereof, and said guide extender (64) includes a resilient sealing ring (65) which is loosely retained in said groove (74) and in sliding contact with an outer peripheral surface of the thimble guide (30).

4. A thimble guide assembly for receiving an elongate thimble inserted into a nuclear fuel assembly through a passage (26) in a reactor core plate (14) supporting the fuel assembly, and through an aperture (22) formed in a bottom-nozzle portion (20) of the fuel assembly substantially in axial alignment with said passage yet spaced therefrom, said thimble guide assembly including an elongate thimble guide (30) which has a thimble channel (62) extending axially therethrough and is adapted to be fixedly mounted on said core plate (14) such that the thimble guide (30) has its thimble channel (62) axially aligned and communicating with said passage (26) of the core plate and projects from the latter toward said bottom-nozzle portion (20), characterized in that said thimble guide assembly includes further a guide (extender (88/Fig.8 or 88'/Fig.9) which comprises a hollow element (90) telescoped partially over the thimble guide (30) and axially movable relative thereto, said hollow element having a lower portion (94) which surrounds part of the thimble guide, and an upper portion (92) which extends above said thimble guide (30) and has a thimble passage (95) extending therethrough substantially in axial alignment with the thimble channel (62) of the thimble guide ; means (96,108) effective to maintain said upper portion (92) of the hollow element (90)in abutment with said bottom-nozzle portion (20) when the thimble guide assembly is in use ; a sleeve-like inner element (96) which is disposed within said hollow element (90), is telescoped partially over the thimble guide (30), and includes latching means (110, 114 ; 132) for releasably latching the inner element to the thimble guide ; said thimble extender including a locking element (98, 126) which is cooperable with said latching means (110, 114 ; 132) and movable between an effective position and an ineffective position for preventing and permitting, respectively, the release of the latching means (110, 114 ; 132).

5. A thimble guide assembly according to claim 4, characterized in that said locking element (98, 126) is a sleeve-like outer element (98) which has a locking portion (126) and is slidable, on said hollow element (90), between said effective and ineffective positions to move said locking portion (126) respectively into and from locking engagement with said latching means (110, 114 ; 132).

6. A thimble guide assembly according to claim 4 or 5, characterized in that said latching means (110, 114) comprises a plurality of resilient fingers (110) projecting from said inner element (96) and each including a latching formation (114) which mates with an annular groove (33) formed in the outer periphery of said thimble guide (30).

7. A thimble guide assembly according to claim 4 or 5, characterized in that said latching means (132) comprises a plurality of balls which are captively retained in openings formed in an annular wall portion of said inner element (96), and which mate with an annular groove (33) formed in the outer periphery of said thimble guide (30).

8. A thimble guide assembly according to claim 4, 5, 6 or 7, characterized in that said locking element (98, 126) is biased toward said effective position thereof.

9. A thimble guide assembly according to claim 4, 5, 6, 7 or 8, characterized by a spring (128) operatively interposed between said hollow element (90) and said locking element (98, 126) so as to bias the latter to said effective position thereof.

10. A thimble guide assembly according to any one of claims 4 to 9, characterized by a spring (108) interposed between said inner element (96) and said hollow element (90) so as to bias the latter in a direction toward abutment with the bottom-nozzle portion (20), said guide extender (88 ; 88') including means (118, 120) for limiting movement of said hollow element (90) in said direction.

11. A thimble guide assembly according to claim 10, characterized in that said means (118, 120) for limiting movement of the hollow element (90) in said direction comprises at least one elongate slot (120) formed in a wall portion of said hollow element (90), and at least one pin (118) extending from said inner element (96) and through the elongate slot (120).

12. A thimble guide assembly according to claim 11, characterized in that said pin (118) extends also through an elongate slot (122) formed in a wall portion of said locking element (124, 126) and cooperating with said pin to locate the locking element in said effective position thereof.

## Ansprüche

1. Meßsondenführungsrohranordnung zur Aufnahme eines länglichen Meßsondenrohres, das ist in ein Kernbrennelement eingefügt ist durch einen Durchlaß (26) in einer das Brennelement tragenden Reaktorkernplatte (14), und durch eine Öffnung (22), die in einem Fußstückteil (20) des Brennelements im wesentlichen in axialer Ausrichtung mit diesem Durchlaß, jedoch mit Abstand davon ausgeformt ist, wobei die Meßsondenführungsrohranordnung ein längliches Meßsondenführungsrohr (30) beinhaltet, das einen sich axial durch dieses erstreckenden Meßsondenrohrkanal (62) aufweist und an der Kernplatte (14) fest montiert werden kann, so daß das Meßsondenführungsrohr (30) seinen Meßsondenrohrkanal (62) zum Durchlaß (26) axial ausgerichtet hat und in Verbindung mit dem Durchlaß (26) der Kernplatte steht und von letzterer gegen das Fußstückteil (20) ragt, dadurch gekennzeichnet, daß die Meßsondenführungsrohranordnung eine ein hohles Element (66) enthaltende Führungsrohrverlängerung (64) beinhaltet, die teilweise über das Meßsondenführungsrohr (30) geschoben ist und relativ dazu axial beweglich ist, wobei das hohle Element einen unteren Teil (70) aufweist, der einen Teil des Meßsondenführungsrohres umgibt und einen oberen Teil (68), der sich oberhalb des Meßsondenführungsrohres (30) erstreckt und einen Meßsondenrohrdurchlaß (80) aufweist, der sich im wesentlichen in axialer Ausrichtung zu dem Meßsondenrohrkanal (62) des Meßsondenführungsrohres durch den oberen Teil (68) erstreckt ; und ein Mittel (84, 86), das den oberen Teil (68) des hohlen Elements (66) wirksam in fester Berührung mit dem Fußstückteil (20) hält, wenn die Meßsondenführungsrohranordnung in Gebrauch ist, wobei das Mittel (84, 86) Verschlußfinger (84, 86) beinhaltet, die von dem oberen Teil (68) des hohlen Elements ausgehen und die mit dem Fußstückteil (20) verriegelbar sind.

2. Meßsondenführungsrohranordnung nach Anspruch 1, dadurch gekennzeichnet, daß die Verschlußfinger (84, 86) durch die Kühlmittelflußöffnungen (23) in den Fußstückteil (20) einführbar sind und sie an ihren distalen Enden Haken (86) ausgebildet haben, wobei die Haken mit den Oberflächenteilen des Fußstückteils zusammenwirken können, um sich mit diesen ineinander zu verhaken.

3. Meßsondenführungsrohranordnung nach Anspruch 1 oder 2, dadurch gekennzeichnet, daß der untere Teil (70) des hohlen Elements (66) eine in ihrem inneren Umfangswandteil ausgebildete ringförmige Nut (74) aufweist, und die Führungsverlängerung (64) einen elastischen Dichtungsring (65) beinhaltet, der lose in der Nut (74) gehalten ist und in Gleitkontakt mit einer Umfangsfläche des Meßsondenführungsrohres (30) ist.

4. Meßsondenführungsrohranordnung zur Aufnahme eines länglichen Meßsondenrohres, das in ein Kernbrennelement eingefügt ist durch einen Durchlaß (26) in einer das Brennelement tragenden Reaktorkernplatte (14), und durch eine Öffnung (22), die in einem Fußstückteil (20) des Brennelements im wesentlichen in axialer Ausrichtung mit dem Durchlaß, jedoch mit Abstand davon ausgeformt ist, wobei die Meßsondenführungsrohranordnung ein längliches Meßsondenführungsrohr (30) beinhaltet, das einen sich axial durch dieses erstreckenden Meßsondenrohrkanal (62) aufweist und an der Kernplatte (14) fest montiert werden kann, so daß das Meßsondenführungsrohr (30) seinen Meßsondenrohrkanal (62) zum Durchlaß (26) axial ausgerichtet hat und in Verbindung mit dem Durchlaß (26) der Kernplatte steht und von letzterer gegen das Fußstückteil (20) ragt, dadurch gekennzeichnet, daß die Meßsondenführungsrohranordnung eine Führungsverlängerung (88/Fig. 8 oder 88'/Fig. 9) beinhaltet, die ein hohles Element (90) enthält, das teilweise über das Meßsondenführungsrohr (30) geschoben ist und relativ dazu axial beweglich ist, wobei das hohle Element einen unteren Teil (94) aufweist, der einen Teil des Meßsondenführungsrohrs umgibt und einen oberen Teil (92), der sich oberhalb des Meßsondenführungsrohrs (30) erstreckt und einen Meßsondenrohrdurchlaß (95) aufweist, der sich im wesentlichen in axialer Ausrichtung mit dem Meßsondenrohrkanal (62) des Meßsondenführungsrohrs durch den oberen Teil (92) erstreckt ; ein Mittel (96, 108), das den oberen Teil (92) des hohlen Elements (90) wirksam in fester Berührung mit dem Fußstückteil (20) hält, wenn die Meßsondenführungsrohranordnung in Gebrauch ist ; ein hülsenartiges inneres Element (96), das innerhalb des hohlen Elements (90) angeordnet ist, zum Teil über das Meßsondenführungsrohr (30) geschoben ist, und Einrastmittel (110, 114 ; 132) für lösbares Verriegeln des inneren Elements am Meßsondenführungsrohr beinhaltet ; wobei die Meßsondenrohrverlängerung ein Verschlußelement (98, 126) beinhaltet, das mit dem Einrastmittel (110, 114 ; 132) zusammenwirken kann und zwischen einer wirksamen und einer unwirksamen Stellung zum jeweiligen Verhindern und Zulassen des Ausklinkens des Einrastmittels (110, 114 ; 132) bewegbar ist.

5. Meßsondenführungsrohranordnung nach Anspruch 4, dadurch gekennzeichnet, daß das Verschlußelement (98, 126) ein hülsenartiges äußeres Element (98) ist, das einen Verschlußteil (126) aufweist und auf dem hohlen Element (90) zwischen den wirksamen und unwirksamen Stellungen verschiebbar ist, um den Verschlußteil (126) jeweils in die Verschlußverbindung mit dem Einrastmittel (110, 114 ; 132) bzw. wieder heraus zu bewegen.

6. Meßsondenführungsrohranordnung nach Anspruch 4 oder 5, dadurch gekennzeichnet, daß das Einrastmittel (110, 114) eine Vielzahl von elastischen Fingern (110) umfaßt, die vom inneren Element (96) hervorstehen und wobei jeder Finger eine Einrastformung (114) aufweist, die in eine ringförmige Nut (33), die im äußeren Umfang des Meßsondenführungsrohres (30) ausgebildet ist, paßt.

7. Meßsondenführungsrohranordnung nach Anspruch 4 oder 5, dadurch gekennzeichnet, daß das Einrastmittel (132) eine Vielzahl von Kugeln umfaßt, die unverlierbar in Öffnungen gehalten werden, die in einem ringförmigen Wandteil des inneren Elements (96) ausgebildet sind, und die in eine ringförmige Nut (33), die im äußeren Umfang des Meßsondenführungsrohres (30) ausgebildet ist, passen.

8. Meßsondenführungsrohranordnung nach Anspruch 4, 5, 6 oder 7, dadurch gekennzeichnet, daß das Verschlußelement (98, 126) in seiner wirksamen Stellung vorgespannt ist.

9. Meßsondenführungsrohranordnung nach Anspruch 4, 5, 6, 7 oder 8, gekennzeichnet durch eine Feder (128), die zwischen das hohle Element (90) und das Verschlußelement (98, 126) wirkend gelegt ist, um das letztere in seiner wirksamen Stellung vor-zuspannen.

10. Meßsondenführungsrohranordnung nach ei-nem der Ansprüche 4 bis 9, gekennzeichnet durch eine Feder (108), die zwischen das innere Element (96) und das hohle Element (90) derart gelegt ist, daß das letztere in eine Richtung für ein festes Aneinanderdrücken mit dem Fußstückteil (20) vorgespannt ist, und wobei die Führungsrohrverlängerung (88 ; 88') Mittel (118, 120) zum Begrenzen der Bewegung des hohlen Elements (90) in dieser Richtung aufweist.

11. Meßsondenführungsrohranordnung nach Anspruch 10, dadurch gekennzeichnet, daß das Mittel (118, 120) zum Begrenzen der Bewegung des hohlen elements (90) in dieser Richtung wenigstens einen länglichen Schlitz (120) und wenigstens einen Stift (118), der sich von dem inneren Element (96) und durch den länglichen Schlitz (120) erstreckt, umfaßt.

12. Meßsondenführungsrohranordnung nach Anspruch 11, dadurch gekennzeichnet, daß sich der Stift (118) auch durch einen länglichen Schlitz (122) erstreckt, der in einem Wandteil des Verschlußelements (124, 126) ausgebildet ist und mit dem Stift zusammenarbeitet, um das Verschlußelement in seiner wirksamen Stellung örtlich festzulegen.

## Revendications

1. Dispositif de guidage de chaussette pour recevoir une chaussette allongée introduite dans un assemblage combustible nucléaire à travers un passage (26) dans une plaque (14) de coeur de réacteur supportant l'assemblage combustible, et à travers une ouverture (22) ménagée dans une partie formant embout inférieur (20) de l'assemblage combustible, sensiblement en alignement axial avec ledit passage mais en en étant espacé, ledit dispositif de guidage de chaussette comprenant un guide (30) de chaussette allongé qui a un conduit (62) pour chaussette s'étendant axialement à travers ce guide et est conçu pour être monté de manière fixe sur ladite plaque (14) de coeur, de façon que le guide (30) de chaussette ait son conduit (62) pour chaussette aligné axialement et communiquant avec ledit passage (26) de la plaque de coeur et qu'il dépasse de cette dernière vers ladite partie formant embout inférieur (20), caractérisé en ce que ledit dispositif de guidage de chaussette comprend en outre une rallonge (64) de guide comportant un élément creux (66) qui s'engage partiellement et de manière télescopique sur le guide (30) de chaussette et est déplaçable axialement par rapport à celui-ci, ledit élément creux ayant une partie inférieure (70) qui entoure une partie du guide de chaussette, et une partie supérieure (68) qui s'étend au-dessus du guide (30) de chaussette et est traversée par un passage (80) pour chaussette sensiblement dans l'axe du conduit (62) pour chaussette du guide de chaussette ; et des moyens (84, 86) servant à maintenir ladite partie supérieure (68) de l'élément creux (66) en butée contre ladite partie formant embout inférieur (20) pendant l'utilisation du dispositif de guidage de chaussette, lesdits moyens (84, 86) comportant des doigts de verrouillage (84, 86) qui s'étendent depuis ladite partie supérieure (68) de l'élément creux et sont mutuellement verrouillables avec ladite partie formant embout inférieur (20).

2. Dispositif de guidage de chaussette selon la revendication 1, caractérisé en ce que lesdits doigts de verrouillage (84, 86) peuvent être insérés à travers les orifices (23) d'écoulement de refroidissement présents dans la partie formant embout inférieur (20) et ont des crochets (86) formés à leurs extrémités distales, lesdits crochets pouvant coopérer avec des portions de surface de la partie formant embout inférieur pour se verrouiller mutuellement avec celles-ci.

3. Dispositif de guidage de chaussette selon la revendication 1 ou 2, caractérisé en ce que ladite partie inférieure (70) de l'élément creux (66) a une gorge annulaire (74) formée dans une partie de la paroi périphérique intérieure de celle-ci, et ladite rallonge (64) de guide comporte une bague d'étanchéité élastique (65) retenue librement dans ladite gorge (74) et coulissant au contact de la surface périphérique extérieure du guide (30) de chaussette.

4. Dispositif de guidage de chaussette pour recevoir une chaussette allongée introduite dans un assemblage combustible nucléaire à travers un passage (26) dans une plaque (14) de coeur de réacteur supportant l'assemblage combustible, et à travers une ouverture (22) ménagée dans une partie formant embout inférieur (20) de l'assemblage combustible, sensiblement en alignement axial avec ledit passage mais en en étant espacé, ledit dispositif de guidage de chaussette comprenant un guide (30) de chaussette allongé qui a un conduit (62) pour chaussette s'étendant axialement à travers ce guide et est conçu pour être monté de manière fixe sur ladite plaque (14) de coeur, de façon que le guide (30) de chaussette ait son conduit (62) pour chaussette aligné axialement et communiquant avec ledit passage (26) de la plaque de coeur et qu'il dépasse de cette dernière vers ladite partie formant embout inférieur (20), caractérisé en ce que ledit dispositif de guidage de chaussette comprend en outre une rallonge de guide (88 sur la Fig. 8 ou 88' sur la Fig. 9) qui comporte un élément creux (90) s'engageant partiellement et de manière télescopique sur le guide (30) de chaussette et déplaçable axialement par rapport à celui-ci, ledit élément creux ayant une partie inférieure (94) qui entoure une partie du guide de chaussette, et une partie supérieure (92) qui s'étend au-dessus dudit guide (30) de chaussette et est traversée par un passage (80) pour chaussette sensiblement dans l'axe de la goulotte (52) de chaussette du guide de chaussette ; des moyens (96, 108) servant à maintenir ladite partie supérieure (92) de l'élément creux (90) en butée contre ladite partie formant embout inférieur (20) pendant l'utilisation du dispositif de guidage de chaussette ; un élément intérieur (96) analogue à un manchon qui est disposé dans ledit élément creux (90), est engagé de manière télescopique partiellement sur le guide (30) de chaussette, et comporte des moyens d'accrochage (110, 114 ; 132) pour accrocher de façon libérable l'élément intérieur au guide de chaussette ; ladite rallonge de guide comportant un élément de verrouillage (98, 126) qui peut coopérer avec lesdits moyens d'accrochage (110, 114 ; 132) et est déplaçable entre une position active et une position de repos, respectivement pour empêcher et permettre le relâchement des moyens d'accrochage (110, 114 ; 132).

5. Dispositif de guidage de chaussette selon la revendication 4, caractérisé en ce que ledit élément de verrouillage (98, 126) est un élément extérieur (98) analogue à un manchon, qui a une partie pour verrouillage (126) et peut coulisser, sur ledit élément creux (90), entre lesdites positions active et de repos afin de déplacer ladite partie pour verrouillage (126) respectivement pour réaliser et supprimer le verrouillage avec lesdits moyens d'accrochage (110, 114 ; 132).

6. Dispositif de guidage de chaussette selon la revendication 4 ou 5, caractérisé en ce que lesdits moyens d'accrochage (110, 114) comprennent une pluralité de doigts élastiques (110) dépassant dudit élément intérieur (96) et comportant chacun un élément d'accrochage (114) qui s'accouple avec une rainure annulaire (33) formée dans la périphérie extérieure dudit guide (30) de chaussette.

7. Dispositif de guidage de chaussette selon la revendication 4 ou 5, caractérisé en ce que ledit moyen d'accrochage (132) comprend une pluralité de billes qui sont retenues emprisonnées dans des ouvertures ménagées dans une partie de la paroi annulaire dudit élément intérieur (96), et qui s'accouplent avec une rainure annulaire (33) formée dans la périphérie extérieure dudit guide (30) de chaussette.

8. Dispositif de guidage de chaussette selon la revendication 4, 5, 6 ou 7, caractérisé en ce que ledit élément de verrouillage (98, 126) est poussé vers ladite position active de celui-ci.

9. Dispositif de guidage de chaussette selon la revendication 4, 5, 6, 7 ou 8, caractérisé par un ressort (128) intercalé pour agir entre ledit élément creux (90) et ledit élément de verrouillage (98, 126) de façon à pousser ce dernier jusqu'à ladite position active de celui-ci.

10. Dispositif de guidage de chaussette selon l'une quelconque des revendications 4 à 9, caractérisé par un ressort (108) intercalé entre ledit élément intérieur (96) et ledit élément creux (90) de façon à pousser ce dernier en direction d'une position de butée contre la partie formant embout inférieur (20), ladite rallonge (88 ; 88') de guide comportant un moyen (118, 120) pour limiter le déplacement dudit élément creux (90) dans ladite direction.

11. Dispositif de guidage de chaussette selon la revendication 10, caractérisé en ce que ledit moyen (118, 120) pour limiter le déplacement de l'élément creux (90) dans ladite direction comporte au moins une fente allongée (120) formée dans une partie formant paroi dudit élément creux (90), et au moins un ergot (118) s'étendant depuis ledit élément intérieur (96) et à travers la fente allongée (120).

12. Dispositif de guidage de chaussette selon la revendication 11, caractérisé en ce que ledit ergot (118) s'étend également à travers une fente allongée (122) formée dans une partie formant paroi dudit élément de verrouillage (124, 126) et coopérant avec ledit ergot pour placer l'élément de verrouillage dans ladite position active de celui-ci.

# FIG. 1
(PRIOR ART)

# FIG. 9

FIG. 2
(PRIOR ART)

FIG. 3

FIG. 4

82  84
84      86
80
86      84
68

FIG. 5

86
84      84
82

FIG. 6

65
78
76

FIG. 7

76   65

FIG. 8